# DEMANDE DE BREVET EUROPEEN

(11) **EP 1 475 615 A1**
(43) Date de publication de la demande: **10.11.2004**
(21) Numéro de dépôt: 04300173.4
(22) Date de dépôt: 31.03.2004
(51) Int. Cl.: G01F 23/04, F01M 11/04, F01M 11/12

(54) **Jauge de contrôle de niveau d'huile**

(30) Priorité: 02.04.2003 FR 0304107
(71) Demandeur: Renault s.a.s., 92100 Boulogne Billancourt (FR)
(72) Inventeur: Debrut, Jean Pierre, 92000 Nanterre (FR); Delaigue, Laurent, 92130 Issy-les-Moulineaux (FR)

(57) **Abrégé**

Jauge de contrôle de niveau, notamment pour véhicule, comportant d'une part un guide de jauge tubulaire (1) surmonté à son extrémité supérieure par un embout ouvert (2) et d'autre part une tige de contrôle de niveau (3) engagée à l'intérieur du guide (1) au travers de l'embout (2), caractérisée en ce que l'embout (2) comprend un premier bras (4) d'introduction de la tige (3), un second bras (6) de remplissage d'huile, et un tronçon (7) de raccordement au guide (1).

## Description

La présente invention concerne les jauges de contrôle de niveau, notamment celles qui sont disposées sur le bloc moteur des véhicules en vue de contrôler le niveau d'huile à l'intérieur de celui-ci.

Plus précisément, elle concerne une jauge de contrôle de niveau, notamment pour véhicule, comportant d'une part un guide de jauge tubulaire surmonté à son extrémité supérieure par un embout ouvert, et d'autre part une tige de contrôle de niveau engagée à l'intérieur du guide au travers de l'embout.

Pour faciliter le remplissage du moteur lorsque le haut moteur n'est pas directement accessible, il est possible de placer sur celui-ci une goulotte de manière à déporter d'orifice de remplissage. Cette solution a pour inconvénient d'orienter les éventuelles coulées d'huile lors du remplissage par bidon, vers certains accessoires sensibles du moteur, tels l'alternateur, le démarreur ou la courroie de transmission, dont le fonctionnement n'est pas compatible avec une aspersion d'huile.

Il a déjà été proposé d'effectuer le remplissage d'huile directement par le tube guide de la jauge. Toutefois, lorsque le haut moteur n'est pas accessible, et que l'environnement du compartiment moteur ne permet pas non plus de rallonger le tube guide de la jauge à huile, une telle solution n'est pas envisageable.

La présente invention a pour but de faciliter à la fois le remplissage et la lecture du niveau d'huile.

Dans ce but, elle propose que l'embout supérieur du tube guide comprenne un premier bras d'introduction de la jauge, un second bras de remplissage d'huile, et un tronçon de raccordement au guide.

De préférence, l'embout a une forme générale en Y dont les deux branches sont constituées respectivement par le premier et par le second bras.

Selon un mode de réalisation particulier de l'invention, l'embout est indexé en position angulaire sur le guide.

D'autres caractéristiques et avantages de l'invention apparaîtront clairement à la lecture de la description suivante d'un mode de réalisation particulier de celle-ci, en se reportant aux dessins annexés sur lesquels :

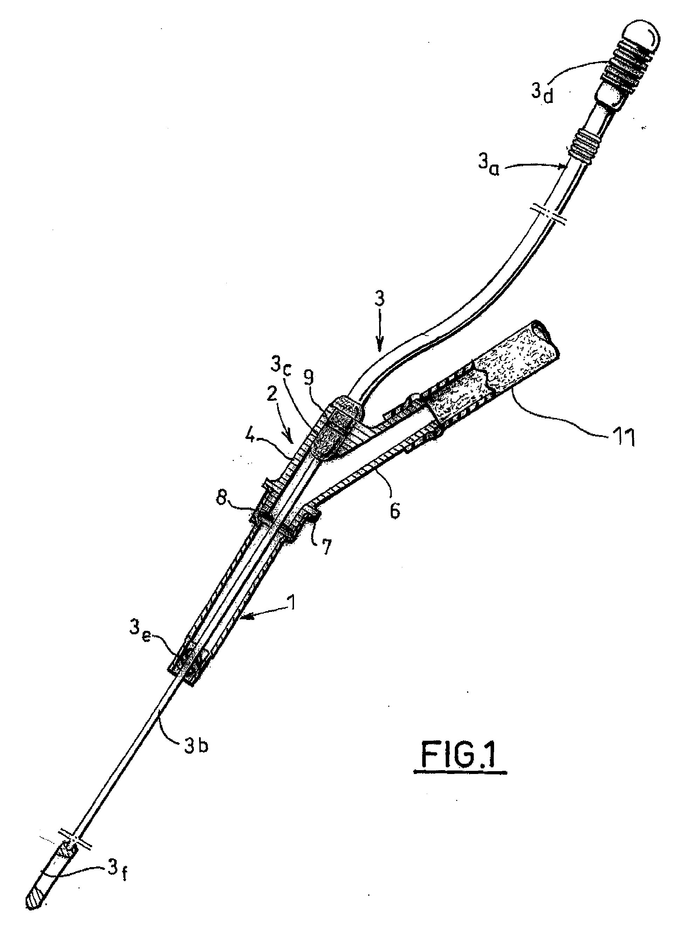

- la figure 1 est une vue d'ensemble de la jauge et du tube guide vu en coupe, et
- les figures 2 et 3 mettent en évidence les moyens d'indexation de l'embout sur le tube guide.

La jauge de contrôle de niveau d'huile illustrée par les figures comprend de façon classique un guide de jauge tubulaire 1 surmonté à son extrémité supérieure par un embout ouvert 2 et une tige de contrôle de niveau 3 engagée à l'intérieur du guide 1 au travers de l'embout 2. L'embout 2 est engagé dans l'extrémité supérieure du guide 1, et l'étanchéité de la liaison entre ces éléments est assurée par un joint torique 8. Le tube 1 est normalement emmanché dans une pièce (non représentée) du bas moteur, telle que le carter cylindre, la semelle ou le carter d'huile.

La tige de contrôle de niveau 3 comprend un premier secteur de préhension 3a situé à l'extérieur de l'embout 2 avec une poignée 3d, un second secteur d'introduction 3b engagé à l'intérieur d'un bras 4 de l'embout 2 et du guide 1, et une zone de lecture de niveau 3f à l'extrémité inférieure du secteur d'introduction 3b. Les deux secteurs 3a, 3b de la tige sont raccordés par un élément cylindrique de fermeture 3c assurant à la fois l'indexage en hauteur de la tige 2 dans le tube 1 et la fermeture du guide en prenant appui sur l'extrémité supérieure du bras 4. L'étanchéité de la liaison entre l'élément 3c et le bras 4 de l'embout 2 est assurée par un joint torique 9. Enfin le secteur d'introduction 3b comporte au moins un élément de centrage 3c, par exemple à nervures radiales, dans le tube 1.

Conformément à l'invention, l'embout 2 comprend un premier bras 4 d'introduction de la tige 3, qui est dans le prolongement du guide 1, un second bras 6 de remplissage d'huile, et un tronçon 7 de raccordement au guide 1. L'embout 2 a une forme générale en Y dont les deux branches sont constituées respectivement par le premier et par le second bras 4 et 6.

Le second bras 6 est utilisé pour le remplissage ou la vidange d'huile par aspiration. Un tuyau souple 11, emmanché sur le bras 6 prolonge celui-ci vers le haut moteur, de sorte que l'extrémité supérieure de ce tuyau (non représentée) soit accessible aussi bien pour un remplissage par bidon ou pistolet automatique, que par une vidange par aspiration.

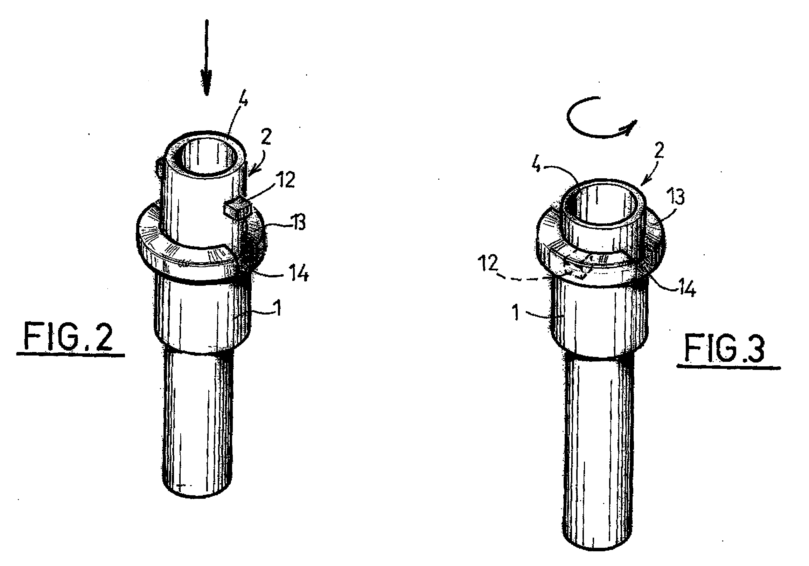

L'embout peut être indexé en position angulaire sur le guide, pour faciliter son montage en usine. Les moyens d'indexage, sont par exemple situés au niveau du raccordement de l'embout 2 et du guide 1. Sur les figures 2 et 3, ces moyens comprennent deux ergots d'indexage 12 portés par l'embout 2 et une gouttière 13 avec deux découpes d'entrée 14, à l'extrémité supérieure du tube 1. Après emmanchement de l'embout sur le guide (figure 2), l'indexage s'effectue par une rotation quart de tour de l'embout à l'intérieur du guide (figure 3), avec déplacement des ergots à l'intérieur de la gouttière 13. Dans ce mode de réalisation particulier, l'indexage est donc réalisé entre l'embout et le guide. Toutefois, sans sortir du cadre de l'invention, on peut réaliser l'indexage angulaire de l'embout par rapport à un organe voisin du moteur.

Comme indiqué pus haut, le second bras de l'embout peut aussi bien être utilisé pour la vidange du moteur que pour son remplissage, la souplesse du tuyau 11 permettant de s'affranchir des contraintes d'encombrement du compartiment moteur. A ce sujet, il faut souligner que l'environnement du moteur est aujourd'hui très contraignant. Par conséquent le fait de disposer d'un point de remplissage (par bidon ou pistolet automatique) et de vidange par aspiration qui soit facilement accessible, est très avantageux

## Revendications

1. Jauge de contrôle de niveau, notamment pour véhicule, comportant d'une part un guide de jauge tubulaire (1) surmonté à son extrémité supérieure par un embout ouvert (2), et d'autre part une tige de contrôle de niveau (3) engagée à l'intérieur du guide (1) au travers de l'embout (2), l'embout (2) comprenant un premier bras (4) d'introduction de la tige (3), un second bras (6) de remplissage d'huile, et un tronçon (7) de raccordement au guide (1), **caractérisé en ce qu'**un tuyau souple (11) emmanché sur le bras (6) prolonge celui-ci vers le haut moteur.

2. Jauge de contrôle selon la revendication 1, **caractérisée en ce que** l'embout a une forme générale en Y dont les deux branches sont constituées respectivement par le premier et par le second bras (4, 6).

3. Jauge de contrôle selon la revendication 1, ou 2 **caractérisée en ce que** le l'embout (2) est indexé en position angulaire sur le guide (1)

4. Jauge de contrôle selon la revendication 3, **caractérisée en ce que** l'embout (2) et le guide (1) sont indexés au niveau de leur raccordement.

5. Jauge de contrôle selon la revendication 4, **caractérisée en ce que** l'embout (2) présente des ergots d'indexage (12) coopérant avec une gouttière (13) du guide (1)

6. Jauge de contrôle selon la revendication 5 **caractérisée en ce que** l'indexage de l'embout (2) s'effectue par une rotation quart de tour de celui-ci à l'intérieur du guide (1).

7. Jauge de contrôle selon la revendication 5 ou 6 **caractérisée en ce que** les ergots d'indexage (12) sont portés par le tronçon de raccordement (7) de l'embout (2).

8. Jauge de contrôle guidage selon la revendication 1 ou 2, **caractérisée en ce que** l'indexage angulaire de l'embout (2) s'effectue par rapport à un organe voisin du moteur.

9. Jauge de contrôle selon l'une des revendications précédente **caractérisée en ce que** le second bras (6) est prolongé vers le haut par un tuyau souple (11) jusqu'à une zone du compartiment moteur accessible pour le remplissage ou la vidange d'huile.

10. Jauge de contrôle selon la revendication 8, **caractérisée en ce que** le tuyau souple (11) est emmanché sur l'extrémité du bras (6).
